# EUROPEAN PATENT APPLICATION

(11) **EP 4 819 322 A1**
(43) Date of publication of application: **07.10.2026**
(21) Application number: 24923265.3
(22) Date of filing: 23.08.2024
(51) Int. Cl.: H01M 50/204, H01M 50/242, H01M 50/244, H01M 50/289, H01M 50/30, H01M 10/613

(54) **BATTERY AND ELECTRIC DEVICE**

(30) Priority: 07.02.2024 CN 202410175431
(71) Applicant: Contemporary Amperex Technology Co., Limited, Ningde, Fujian 352100 (CN)
(72) Inventor: LONG, Chao, Ningde, Fujian 352100 (CN); CHEN, Xingdi, Ningde, Fujian 352100 (CN); ZHANG, Wenhui, Ningde, Fujian 352100 (CN); WANG, Peng, Ningde, Fujian 352100 (CN)
(74) Representative: Lorenz Seidler Gossel Part. mbB
(86) International application number: PCT/CN2024/114122
(87) International publication number: WO 2025/167055

(57) **Abstract**

A battery and an electric device. The battery (2) comprises a case (202), a battery cell group (7) and a blocking structure (8), wherein the case (202) is provided with an accommodating cavity; and the battery cell group (7) is located in the accommodating cavity, and the battery cell group (7) comprises at least one column of a plurality of battery cells (3) arranged in a first direction, each battery cell (3) comprising a first wall (31) and a second wall (32) connected to and intersecting with each other, the first wall (31)being provided with a pressure relief mechanism, and a gap (203) being provided between the second wall (32) and the case (202). When thermal runaway occurs in the battery, high-temperature ejecta is ejected from the pressure relief mechanism of the first wall (31); and at least part of the blocking structure (8) is located within the gap (203) to prevent at least some of emissions discharged via the pressure relief mechanism from entering the gap (203).

## Description

### CROSS-REFERENCE TO RELATED APPLICATION

The present application claims priority to Chinese Patent Application No. 202410175431.5 filed on February 7, 2024 and entitled "BATTERY AND ELECTRIC DEVICE", the content of which is incorporated herein by reference in its entirety.

### TECHNICAL FIELD

The present application relates to the field of batteries, and in particular, to a battery and an electric device.

### BACKGROUND

Lithium-ion power batteries have characteristics such as a high operating voltage, high specific energy, compact size, light weight, long cycle life, low self-discharge rate, no memory effect, and no pollution, and are therefore widely adopted by many power equipment manufacturers.

In the prior art, when thermal runaway occurs inside a battery, high-temperature ejecta from the battery overflows into the space between the battery cell and the case, damaging the insulating film of the battery cell, and causing the battery cell to contact the case, leading to exacerbation of the thermal runaway of the battery. Therefore, improvement is urgently needed.

### SUMMARY

In view of the above problems, the present application provides a battery and an electric device, which can mitigate the problem of exacerbation of thermal runaway of the battery caused by damage to the insulating film of the battery cell and contact between the battery cell and the case due to high-temperature ejecta from the battery during thermal runaway of the battery, thereby enhancing the reliability of the battery.

In a first aspect, the present application provides a battery. The battery includes: a case provided with an accommodating cavity; a battery cell group located within the accommodating cavity, where the battery cell group includes at least one row of a plurality of battery cells arranged in a first direction, the battery cell includes a first wall and a second wall connected to and intersecting with each other, the first wall is provided with a pressure relief mechanism, and a gap is provided between the second wall and the case; and a blocking structure, at least a portion of the blocking structure being located within the gap, so as to block at least part of emissions discharged via the pressure relief mechanism from entering the gap.

In the solutions of embodiments of the present application, the battery includes a case, a battery cell, and a blocking structure. The case is provided with an accommodating cavity. The battery cell group is located within the accommodating cavity; the battery cell group includes at least one row of a plurality of battery cells arranged in a first direction. The battery cell includes a first wall and a second wall connected to and intersecting with each other; the first wall is provided with a pressure relief mechanism, and a gap is provided between the second wall and the case. When thermal runaway occurs in the battery, high-temperature ejecta are expelled from the pressure relief mechanism of the first wall, and at least a portion of the blocking structure is located within the gap, so as to block at least part of the emissions discharged via the pressure relief mechanism from entering the gap. This mitigates the risk that high-temperature ejecta damages the insulating film of the second wall and causes the second wall to contact the inner wall of the case, leading to internal short circuits of the battery and exacerbating thermal runaway of the battery, thereby enhancing the reliability of the battery.

In some embodiments, the blocking structure is connected to an outer surface of the battery cell and extends from the outer surface of the battery cell into the gap.

In the technical solutions of the embodiments of the present application, the blocking structure is connected to an outer surface of the battery cell and extends from the outer surface of the battery cell into the gap. This reduces the distance between the blocking structure and the pressure relief structure, enhancing the blocking effect of the blocking structure. In addition, the size of the blocking structure can be reduced, thereby reducing the weight of the battery.

In some embodiments, the blocking structure includes a first segment and a second segment connected to each other, the case includes a first case wall, the first segment is disposed between the first wall and the first case wall, and the second segment extends into the gap.

In the technical solutions of the embodiments of the present application, the blocking structure includes a first segment and a second segment connected to each other. The case includes a first case wall. The first segment is disposed between the first wall and the first case wall; the first segment enhances the rigidity of the battery and enhances the deformation resistance of the case. The second segment extends into the gap; the second segment blocks high-temperature ejecta from entering the gap, thereby enhancing the reliability of the battery.

In some embodiments, the case further includes a second case wall connected to a peripheral side of the first case wall, and the gap is formed between the second case wall and the second wall.

In the technical solutions of the embodiments of the present application, the case further includes a second case wall connected to a peripheral side of the first case wall, and the gap is formed between the second case wall and the second wall. The distance between the gap and the first wall is reduced, such that the size of the second segment is reduced while the blocking structure blocks high-temperature ejecta from entering the gap, thereby reducing the processing difficulty of the blocking structure.

In some embodiments, the battery further includes an electrical connection structure; the electrical connection structure is connected to one end of the battery cell group in the first direction, and the electrical connection structure extends toward the other end of the battery cell group in the first direction. The electrical connection structure includes an extending segment located within the gap, and the extending segment is connected to the second segment.

In the technical solutions of the embodiments of the present application, the battery further includes an electrical connection structure; the electrical connection structure is connected to one end of the battery cell group in the first direction, and the electrical connection structure extends toward the other end of the battery cell group in the first direction. The electrical connection structure includes an extending segment located within the gap, thereby properly utilizing the internal space of the case and enhancing the internal space utilization rate of the case. The extending segment is connected to the second segment, thereby enhancing the stability of the electrical connection structure.

In some embodiments, a portion of the second segment located within the gap is bent in a direction facing away from the first case wall, so as to form an accommodating space between the second segment and the first case wall, and at least a portion of the extending segment is disposed within the accommodating space.

In the technical solutions of the embodiments of the present application, a portion of the second segment located within the gap is bent in a direction facing away from the first case wall, so as to form an accommodating space between the second segment and the first case wall, and at least a portion of the extending segment is disposed within the accommodating space. Through the accommodating space formed by bending, the distance between the second segment and the first case wall is increased, and the assembly difficulty between the extending segment and the second segment is reduced. In addition, at least a portion of the extending segment is disposed within the accommodating space, such that the second segment limits the extending segment via the wall part of the accommodating space.

In some embodiments, the blocking structure further includes a connecting member located in the accommodating space; one end of the connecting member is connected to the second segment, and the other end of the connecting member is connected to the extending segment.

In the technical solutions of the embodiments of the present application, the blocking structure further includes a connecting member located in the accommodating space. The extending segment is connected to the second segment via the connecting member, thereby enhancing the connection reliability between the second segment and the extending segment.

In some embodiments, the battery further includes a heat exchange structure; the heat exchange structure is configured to regulate a temperature of the battery cell, and at least a portion of the heat exchange structure is accommodated within the gap and located on a side of the second segment facing away from the first case wall.

In the technical solutions of the embodiments of the present application, the battery further includes a heat exchange structure; the heat exchange structure is configured to regulate the temperature of the battery cell, and at least a portion of the heat exchange structure is accommodated within the gap and located on a side of the second segment facing away from the first case wall. Thus, when thermal runaway occurs in the battery, the second segment can be configured to block high-temperature ejecta from contacting the heat exchange structure, thereby prolonging the service life of the heat exchange structure.

In some embodiments, the heat exchange structure includes a heat exchange main body and a heat exchange conduit; the heat exchange main body is in heat conducting connection with the battery cell, the heat exchange conduit is in communication with the heat exchange main body and an external environment, and at least a portion of the heat exchange conduit is located on the side of the second segment facing away from the first case wall.

In the technical solutions of the embodiments of the present application, the heat exchange structure includes a heat exchange main body and a heat exchange conduit. The heat exchange main body is in heat conducting connection with the battery cell, thereby enabling the heat exchange main body to regulate the temperature of the battery cell. The heat exchange conduit is in communication with the heat exchange main body and an external environment, and at least a portion of the heat exchange conduit is located on the side of the second segment facing away from the first case wall, such that during thermal runaway of the battery, the second segment can block at least part of the high-temperature ejecta from contacting the heat exchange conduit, thereby prolonging the service life of the heat exchange structure.

In some embodiments, the first segment includes a weight reducing cavity extending in the first direction.

In the technical solutions of the embodiments of the present application, the first segment includes a weight reducing cavity extending in the first direction, so as to reduce the weight of the blocking structure, thereby achieving an overall weight reduction of the battery. In addition, when the first case wall is subjected to an external impact, the first segment can deform through the weight reducing cavity to absorb energy, thereby enhancing the protective capability of the blocking structure for the battery cell group.

In some embodiments, the battery further includes a buffer member; the buffer member is disposed between the first segment and the first case wall, and the buffer member is elastically disposed in a thickness direction of the first case wall.

In the technical solutions of the embodiments of the present application, the battery further includes a buffer member; the buffer member is disposed between the first segment and the first case wall, and the buffer member is elastically disposed in a thickness direction of the first case wall. The buffer member can absorb an assembly tolerance between the first segment and the first case wall, thereby reducing the processing difficulty of the battery.

In some embodiments, the case further includes a crossbeam extending in a second direction and connected to an inner wall surface of the case. Two crossbeams are spaced apart from each other in the first direction, the battery cell group is disposed between the two crossbeams, and both ends of the blocking structure are connected to the two crossbeams. The first direction intersects with the second direction.

In the technical solutions of the embodiments of the present application, the case further includes a crossbeam extending in a second direction and connected to an inner wall surface of the case. Two crossbeams are spaced apart from each other in the first direction, the battery cell group is disposed between the two crossbeams, and both ends of the blocking structure are connected to the two crossbeams, thereby enhancing the connection reliability between the blocking structure and the case.

In some embodiments, the battery further includes a pressing strip. Both ends of the pressing strip are connected to the two crossbeams. A plurality of battery cell groups are arranged in the second direction, the pressing strip is connected to two adjacent battery cell groups, and the blocking structure is connected to battery cell groups at both ends of the second direction.

In the technical solutions of the embodiments of the present application, the battery further includes a pressing strip. Both ends of the pressing strip are connected to the two crossbeams, thereby enhancing the connection reliability between the pressing strip and the case. A plurality of battery cell groups are arranged in the second direction; the pressing strip enhances the rigidity of the case. The pressing strip is connected to two adjacent battery cell groups, and the blocking structure is connected to battery cell groups at both ends of the second direction, such that the pressing strip and the blocking structure fix and limit the battery cell groups, thereby enhancing the reliability of the battery.

In a second aspect, the embodiments of the present application provide an electric device. The electric device includes the battery according to any one of the embodiments of the first aspect.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the present application. Furthermore, the same reference numerals in all the drawings denote identical components. In the drawings:
FIG. 1 is a schematic structural diagram of a vehicle according to an embodiment of the present application;
FIG. 2 is a schematic structural diagram of a battery according to an embodiment of the present application;
FIG. 3 is a schematic structural diagram of a battery module according to an embodiment of the present application;
FIG. 4 is a schematic structural diagram of a battery cell according to an embodiment of the present application;
FIG. 5 is a schematic structural diagram of a battery according to an embodiment of the present application;
FIG. 6 is an exploded view of a battery according to an embodiment of the present application;
FIG. 7 is a cross-sectional view along A-A in FIG. 5;
FIG. 8 is an enlarged schematic structural diagram of part B in FIG. 7;
FIG. 9 is a schematic diagram of part of the structure of a battery according to an embodiment of the present application;
FIG. 10 is a top view of a blocking structure of a battery according to an embodiment of the present application;
FIG. 11 is a cross-sectional view along C-C in FIG. 10;
FIG. 12 is a top view of a blocking structure of a battery according to another embodiment of the present application;
FIG. 13 is a cross-sectional view along D-D in FIG. 12; and
FIG. 14 is a schematic structural diagram of a blocking structure of a battery according to an embodiment of the present application.
1, vehicle; 101, motor; 102, controller; 201, battery module;
2, battery; 202, case; 2021, first case part; 2022, second case part; 2023, first case wall; 2024, second case wall; 203, gap; 204, crossbeam;
3, battery cell; 31, first wall; 32, second wall; 4, housing; 5, electrode assembly; 6, top cover assembly;
7, battery cell group;
8, blocking structure; 81, first segment; 82, second segment; 811, weight reducing cavity; 84, connecting member; 85, connecting segment; 821, accommodating space;
91, heat exchange structure; 92, electrical connection structure; 93, buffer member; 94, pressing strip; 911, heat exchange main body; 912, heat exchange conduit; 921, extending segment.s

### DETAILED DESCRIPTION

Embodiments of the technical solutions of the present application will be described in detail below with reference to the drawings. The following embodiments are merely used to more clearly illustrate the technical solutions of the present application, and therefore, are only exemplary and do not limit the protection scope of the present application.

It should be noted that, unless otherwise specified, the technical or scientific terms used in the embodiments of the present application shall have ordinary meanings understood by those skilled in the art to which the embodiments of the present application belong.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like indicate orientations or positional relationships based on those shown in the drawings. They are merely for the convenience of describing the embodiments of the present application and simplifying the description, rather than indicating or implying that the apparatus or element referred to must have a specific orientation or be constructed and operated in the specific orientation, and thus should not be construed as a limitation to the embodiments of the present application.

In addition, the technical terms "first", "second", and the like are used for description only and are not to be construed as indicating or implying relative importance or to implicitly indicate the number of technical features indicated. In the description of the embodiments of the present application, unless otherwise specifically defined, "plurality of" means two or more.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application may be interpreted according to specific conditions.

In the description of the embodiments of the present application, unless otherwise clearly specified and defined, a first feature being "above" or "below" a second feature may be that the first feature and the second feature are in direct contact, or that the first feature and the second feature are in indirect contact via an intermediate. Moreover, a first feature being "over", "above", and "on top of" a second feature may be that the first feature is right above or obliquely above the second feature, or may simply mean that the first feature is at a higher horizontal level than the second feature. A first feature being "under", "below", and "beneath" a second feature may be that the first feature is right under or obliquely under the second feature, or may simply mean that the first feature is at a lower horizontal level than the second feature.

At present, judging from the trends in the market, the application of power batteries is becoming increasingly widespread. Power batteries are not only applied in energy storage power systems such as hydropower, thermal power, wind power, and solar power stations, but also widely applied in electric transportation vehicles such as electric bicycles, electric motorcycles, or electric cars, as well as in military equipment, aerospace, and other fields. With the continuous expansion of the application field of power batteries, the market demand for power batteries is also constantly increasing.

In the present application, battery cells may include lithium-ion secondary battery cells, lithium-ion primary battery cells, lithium-sulfur battery cells, sodium-lithium-ion battery cells, sodium-ion battery cells, magnesium-ion battery cells, etc., which are not limited in the embodiments of the present application. The battery cell may be cylindrical, flat, rectangular parallelepiped-shaped, or in other shapes, which is also not limited in the embodiments of the present application.

The battery mentioned in the embodiments of the present application refers to a single physical module including one or a plurality of battery cells to provide higher voltage and capacity. For example, the battery mentioned in the present application may include a battery module, a battery pack, or the like. The battery generally includes a case configured to encapsulate one or a plurality of battery cells. The case can prevent liquid or other foreign matter from affecting the charging or discharging of the battery cells.

A battery cell includes an electrode assembly and an electrolytic solution, and the electrode assembly includes a positive electrode plate, a negative electrode plate, and a separator. The battery cell primarily works by the movement of metal ions between the positive electrode plate and the negative electrode plate. The positive electrode plate includes a positive electrode current collector and a positive electrode active substance layer, and the positive electrode active substance layer is applied on the surface of the positive electrode current collector. The positive electrode current collector includes a positive electrode current collecting part and a positive electrode tab connected to the positive electrode current collecting part. The positive electrode current collecting part is coated with the positive electrode active substance layer, and the positive electrode tab is not coated with the positive electrode active substance layer. Taking lithium-ion batteries as an example, the material of the positive electrode current collector may be aluminum, the positive electrode active substance layer includes a positive electrode active substance, and the positive electrode active substance may be lithium cobaltate, lithium iron phosphate, ternary lithium, lithium manganate, or the like. The negative electrode plate includes a negative electrode current collector and a negative electrode active substance layer, and the negative electrode active substance layer is applied on the surface of the negative electrode current collector. The negative electrode current collector includes a negative electrode current collecting part and a negative electrode tab connected to the negative electrode current collecting part. The negative electrode current collecting part is coated with the negative electrode active substance layer, and the negative electrode tab is not coated with the negative electrode active substance layer. The material of the negative electrode current collector may be copper, the negative electrode active substance layer includes a negative electrode active substance, and the negative electrode active substance may be carbon, silicon, or the like. The material of the separator may be polypropylene (PP), polyethylene (PE), or the like.

In the prior art, when thermal runaway occurs inside the battery, the severity of the thermal runaway exceeds the expected level.

Analysis of disassembled batteries indicates that, during thermal runaway inside a battery, high-temperature ejecta are expelled from an anti-explosion valve of the battery cell. The high-temperature ejecta overflows into the space between the battery cell and the housing, melting the insulating film of the battery cell. Furthermore, the high-temperature ejecta bridges between the battery housing and the housing, allowing the battery housing to be in communication with the housing, thereby exacerbating the thermal runaway.

Based on the above problems, the embodiments of the present application provide a battery. The battery includes a case, a battery cell, and a blocking structure. The case is provided with an accommodating cavity. The battery cell group is located within the accommodating cavity; the battery cell group includes at least one row of a plurality of battery cells arranged in a first direction. The battery cell includes a first wall and a second wall connected to and intersecting with each other; the first wall is provided with a pressure relief mechanism, and a gap is provided between the second wall and the case. When thermal runaway occurs in the battery, high-temperature ejecta are expelled from the pressure relief mechanism of the first wall, and at least a portion of the blocking structure is located within the gap, so as to block at least part of the emissions discharged via the pressure relief mechanism from entering the gap. This mitigates the risk that high-temperature ejecta damages the insulating film of the second wall and bridges between the second wall and the inner wall of the case, leading to internal short circuits of the battery and exacerbating thermal runaway of the battery, thereby enhancing the reliability of the battery.

The technical solutions described in the embodiments of the present application are applicable to batteries and electric devices using batteries.

The electric device may be a vehicle, a mobile phone, a portable device, a laptop computer, a ship, a spacecraft, an electric toy, an electric tool, or the like. The vehicle may be a fuel vehicle, a gas vehicle, or a new energy vehicle, and the new energy vehicle may be a pure electric vehicle, a hybrid electric vehicle, an extended-range vehicle, or the like; the spacecraft includes an airplane, a rocket, a space shuttle, a spaceship, and the like; the electric toy includes a stationary or mobile electric toy, such as a game console, an electric car toy, an electric ship toy, and an electric airplane toy; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer. The electric devices described above are not specially limited in the embodiments of the present application.

It should be understood that the technical solutions described in the embodiments of the present application are not limited to be applicable to the batteries and electric devices described above. They are also applicable to all batteries that include the case, as well as electric devices that use batteries. However, for brevity, the following embodiments are all illustrated using an electric vehicle as an example.

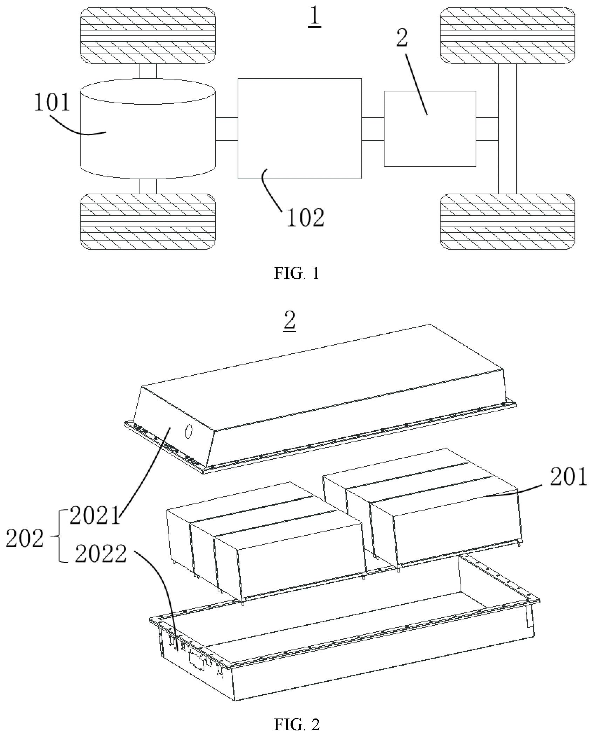

Referring to FIG. 1, FIG. 1 is a schematic structural diagram of a vehicle 1 according to some embodiments of the present application. The vehicle 1 may be a fuel vehicle, a gas vehicle, or a new energy vehicle. The new energy vehicle may be a pure electric vehicle, a hybrid vehicle, an extended-range vehicle, or the like. A battery 2 is disposed inside the vehicle 1, and the battery may be disposed at the bottom, head, or tail of the vehicle 1. The battery 2 may be configured to power the vehicle 1. For example, the battery 2 may serve as an operation power source for the vehicle 1. The vehicle 1 may further include a controller 102 and a motor 101. The controller 102 is configured to control the battery to power the motor 101, e.g., for the operation power needed by the vehicle 1 for start-up, navigation, and driving.

In some embodiments of the present application, the battery may not only serve as the operation power source for the vehicle 1, but also as a driving power source for the vehicle 1 to, replacing or partially replacing fuel or natural gas, provide driving power for the vehicle 1.

To meet different power usage requirements, the battery 2 may include a plurality of battery cells, and a battery cell refers to the smallest unit that forms a battery module or a battery pack. A plurality of battery cells may be connected in series and/or in parallel via electrode terminals to be applied to various application scenarios. The battery 2 mentioned in the present application includes a battery module or a battery pack. The plurality of battery cells may be connected in series, in parallel, or in series-parallel. The series-parallel connection refers to a combination of series connection and parallel connection. In the embodiments of the present application, a plurality of battery cells may be directly assembled into a battery pack, or may be first assembled into a battery module, which is then assembled into a battery pack.

FIG. 2 shows a schematic structural diagram of a battery 2 according to an embodiment of the present application.

As shown in FIG. 2, the battery includes a case 202 and a battery cell (not shown in the drawing). The battery cell is accommodated in the case 202.

The case 202 may be of a simple three-dimensional structure, such as a single rectangular parallelepiped, cylinder, or sphere, or may also be of a complex three-dimensional structure composed of simple three-dimensional structures, such as a rectangular parallelepiped, a cylinder, or a sphere. The case 202 may be made of an alloy material such as aluminum alloy or iron alloy, or a polymer material such as polycarbonate or polyisocyanurate foam plastic, or a composite material such as glass fiber plus epoxy resin.

The case 202 is configured to accommodate the battery cell, and the case 202 may be of various structures. In some embodiments, the case 202 may include a first case part 2021 and a second case part 2022. The first case part 2021 and the second case part 2022 are mutually lidded, and the first case part 2021 and the second case part 2022 jointly define an accommodating space for accommodating the battery cell 3. The second case part 2022 may be of a hollow structure with one end open, the first case part 2021 is of a plate-like structure, and the open side of the second case part 2022 is lidded with the first case part 2021 to form the case 202 having the accommodating space. The first case part 2021 and the second case part 2022 may each be of a hollow structure with one side open, and the open side of the second case part 2022 is lidded with the open side of the first case part 2021 to form the case 202 having the accommodating space. Certainly, the first case part 2021 and the second case part 2022 may be of various shapes, such as cylindrical and rectangular parallelepiped.

To improve the sealing performance after the first case part 2021 and the second case part 2022 are connected, a sealing member, such as a sealant or a seal ring, may be further provided between the first case part 2021 and the second case part 2022.

If the top part of the second case part 2022 is lidded with the first case part 2021, the first case part 2021 may also be referred to as an upper case cover, and the second case part 2022 may also be referred to as a lower case cover.

In the battery 2, one or a plurality of battery cells may be provided. If a plurality of battery cells are provided, the plurality of battery cells may be connected in series, in parallel, or in series-parallel. The series-parallel connection means that both series connection and parallel connection are present for the connection of the plurality of battery cells. The plurality of battery cells may be directly connected in series, in parallel, or in series-parallel, and then the whole formed by the plurality of battery cells is accommodated in the case 202. Certainly, the situation may be that the plurality of battery cells are first connected in series, in parallel, or in series-parallel to form battery modules 201, and then the plurality of battery modules 201 are connected in series, in parallel, or in series-parallel to form a whole and accommodated in the case 202.

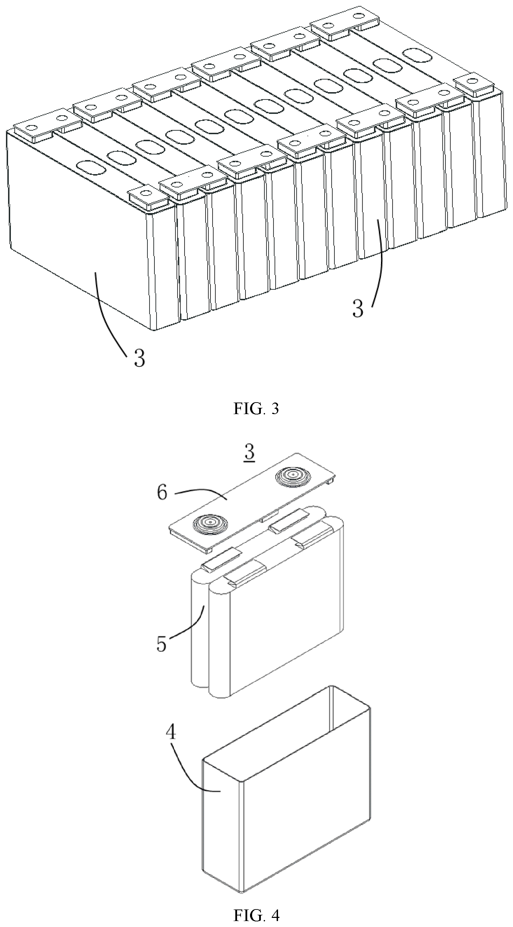

FIG. 3 shows a schematic structural diagram of a battery module 201 according to an embodiment of the present application.

In some embodiments, as shown in FIGs. 2 and 3, a plurality of battery cells 3 are provided, and the plurality of battery cells 3 are first connected in series, in parallel, or in series-parallel to form a battery module 201. The plurality of battery modules 201 are then connected in series, in parallel, or in series-parallel to form a whole and accommodated in the case 202.

The plurality of battery cells 3 in the battery module 201 may be electrically connected via a busbar component to achieve parallel connection, series connection, or series-parallel connection among the plurality of battery cells 3 in the battery module 201.

In the present application, the battery cell 3 may include a lithium-ion battery cell, a sodium-ion battery cell, a magnesium-ion battery cell, or the like, which is not limited in the embodiments of the present application. The battery cell 3 may be cylindrical, flat, rectangular parallelepiped-shaped, or in other shapes, which is also not limited in the embodiments of the present application. However, for the sake of brevity, the following embodiments are all illustrated using a prismatic battery cell as an example.

FIG. 4 is a schematic structural diagram of a battery cell 3 according to some embodiments of the present application. The battery cell 3 refers to the smallest unit forming a battery. As shown in FIG. 4, the battery cell 3 includes a top cover assembly 6, a housing 4, and an electrode assembly 5.

The electrode assembly 5 is a component where the electrochemical reaction occurs in the battery cell 3. One or more electrode assemblies 5 may be accommodated in the housing 4. The electrode assembly 5 is mainly formed by winding or stacking electrode plates, which are divided into a positive electrode plate and a negative electrode plate, and a separator is generally provided between the positive electrode plate and the negative electrode plate. The portions of the positive electrode plate and the negative electrode plate that contain active substance constitute the electrode main body, and the portions of the positive electrode plate and the negative electrode plate that do not contain active substance each constitute a tab. The positive electrode tab and the negative electrode tab may be located together at one end of the main body part or separately at two ends of the main body part. During the charging and discharging process of the battery, the positive electrode active substance and the negative electrode active substance react with the electrolytic solution, and the tabs are connected to the electrode terminals to form a current circuit.

The housing 4 is an assembly configured to cooperate with the top cover assembly 6 to form an interior environment of the battery cell 3, in which the formed interior environment is configured to accommodate the electrode assembly 5, the electrolytic solution (not shown in the figure), and other components. The housing 4 and the top cover assembly 6 may be independent components. An opening may be formed in the housing 4, and the opening is configured to be lidded with the top cover assembly 6 to form the interior environment of the battery cell 3. Optionally, the top cover assembly 6 and the housing 4 may be integrally formed. Optionally, the top cover assembly 6 and the housing 4 may form a common connection surface before other components are placed in the housing, and when the interior of the housing 4 needs to be encapsulated, the housing 4 is lidded with the top cover assembly 6. The housing 4 may be in various shapes and sizes, such as a rectangular parallelepiped, a cylinder, and a hexagonal prism. The shape of the housing 4 may be determined according to the specific shape and size of the electrode assembly 5. The housing 4 may be made of various materials. Optionally, the housing 4 may be made of copper, iron, aluminum, stainless steel, aluminum alloy, plastic, or the like.

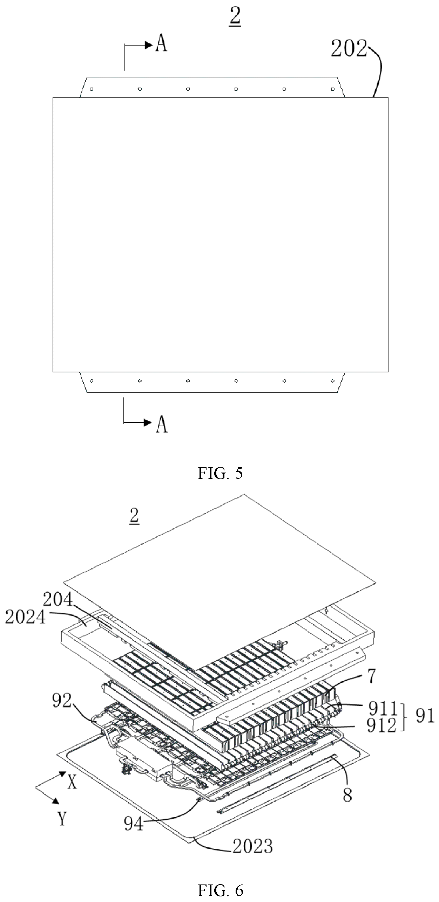

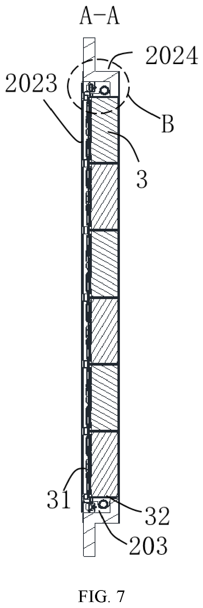

Referring to FIGs. 5, 6, and 7, FIG. 5 is a schematic structural diagram of a battery according to an embodiment of the present application; FIG. 6 is an exploded view of a battery according to an embodiment of the present application; FIG. 7 is a cross-sectional view along A-A in FIG. 5.

In a first aspect, as shown in FIGs. 5 to 7, the present application provides a battery 2. The battery 2 includes a case 202, a battery cell 3, and a blocking structure 8. The case 202 is provided with an accommodating cavity. The battery cell group 7 is located within the accommodating cavity; the battery cell group 7 includes at least one row of a plurality of battery cells 3 arranged in a first direction X. The battery cell 3 includes a first wall 31 and a second wall 32 connected to and intersecting with each other. The first wall 31 is provided with a pressure relief mechanism, and a gap 203 is provided between the second wall 32 and the case 202. At least a portion of the blocking structure 8 is located within the gap 203, so as to block at least part of the emissions discharged via the pressure relief mechanism from entering the gap 203.

In the solutions of the embodiments of the present application, the battery 2 includes a case 202, a battery cell 3, and a blocking structure 8. The case 202 is provided with an accommodating cavity. The battery cell group 7 is located within the accommodating cavity; the battery cell group 7 includes at least one row of a plurality of battery cells 3 arranged in a first direction X. The battery cell 3 includes a first wall 31 and a second wall 32 connected to and intersecting with each other. The first wall 31 is provided with a pressure relief mechanism, and a gap 203 is provided between the second wall 32 and the case 202. When thermal runaway occurs in the battery 2, high-temperature ejecta are expelled from the pressure relief mechanism of the first wall 31, and at least a portion of the blocking structure 8 is located within the gap 203, so as to block at least part of the emissions discharged via the pressure relief mechanism from entering the gap 203. This mitigates the risk that high-temperature ejecta damages the insulating film of the second wall 32 and bridges between the second wall 32 and the inner wall of the case 202, leading to internal short circuits of the battery 2 and exacerbating thermal runaway of the battery 2, thereby enhancing the reliability of the battery 2.

Specifically, the case 202 includes an accommodating cavity, and the battery cell group 7 is assembled in the accommodating cavity. The battery cell group 7 includes at least one row of a plurality of battery cells 3 arranged in a first direction X.

The battery cell 3 includes a first wall 31 and a second wall 32 connected to and intersecting with each other. Exemplarily, when the battery cell 3 is a cylindrical battery cell 3, the first wall 31 is one of the top or bottom end wall or the side wall, and the second wall 32 is the other of the top or bottom end wall or the side wall. When the battery cell 3 is a prismatic battery cell 3, the first wall 31 and the second wall 32 are two wall surfaces connected to and intersecting with each other.

A pressure relief mechanism is disposed on the first wall 31, and the pressure relief mechanism is configured to release the internal pressure of the battery 2 to the outside when the internal temperature or pressure of the battery 2 exceeds a threshold. Exemplarily, the pressure relief mechanism may be a pressure relief valve, an anti-explosion valve, a balancing valve, or the like.

The surface of the battery cell 3 is covered with an insulating film. The insulating film is configured to provide insulation between adjacent battery cells 3 and between the battery cell 3 and the case 202. A gap 203 is provided between the battery cell 3 and the case 202. When thermal runaway occurs in the battery 2, high-temperature substances released via the pressure relief mechanism enter the gap 203. The high-temperature substances melt the insulating film, resulting in direct contact between the battery cell 3 and the case 202.

Therefore, in the embodiments of the present application, the blocking structure 8 is provided, and at least a portion of the blocking structure 8 is located within the gap 203, so as to block at least part of the emissions discharged via the pressure relief mechanism from entering the gap 203. Specifically, one end of the blocking structure 8 is connected to the inner surface of the case 202 opposite the second wall 32, and the other end thereof extends into the gap 203. Alternatively, one end of the blocking structure 8 is connected to the inner surface of the case 202 opposite the first wall 31, and the other end thereof extends into the gap 203. Alternatively, one end of the blocking structure 8 is connected to the battery cell group 7, and the other end thereof extends into the gap 203.

Optionally, the blocking structure 8 is integrally formed and extends in the first direction X. Alternatively, the blocking structure 8 is formed by connecting a plurality of substructures arranged in the first direction X.

Optionally, the blocking structure 8 is made of an insulating material, which has good flame-retardant and high-temperature resistant properties, thereby prolonging the service life of the blocking structure 8.

Optionally, the blocking structure 8 completely isolates the gap 203 from the pressure relief mechanism, thereby enhancing the blocking effect of the blocking structure 8 on high-temperature substances.

In some embodiments, as shown in FIGs. 5 and 6, the blocking structure 8 is connected to an outer surface of the battery cell 3 and extends from the outer surface of the battery cell 3 into the gap 203.

In these embodiments, the blocking structure 8 is connected to an outer surface of the battery cell 3 and extends from the outer surface of the battery cell 3 into the gap 203. This reduces the distance between the blocking structure 8 and the pressure relief structure, enhancing the blocking effect of the blocking structure 8. In addition, the size of the blocking structure 8 can be reduced, thereby reducing the weight of the battery 2.

The blocking structure 8 is connected to the outer surface of the battery cell 3 by abutment or adhesive connection. The blocking structure 8 is connected to the first wall 31 and/or the second wall 32 of the battery cell 3. When the battery cell 3 is connected to the first wall 31, one end of the blocking structure 8 is connected to the first wall 31, and the other end thereof extends into the gap 203. In this case, both the portion of the blocking structure 8 in contact with the first wall 31 and the portion of the first wall 31 extending into the gap 203 can isolate the pressure relief mechanism from the gap 203. When the battery cell 3 is connected to the second wall 32, one end of the blocking structure 8 is connected to the first wall 31, and the other end thereof extends into the gap 203. In this case, the size of the blocking structure 8 can be reduced while the blocking structure 8 isolates the pressure relief mechanism from the gap 203, thereby reducing the weight of the battery 2.

Optionally, when the battery cell 3 is connected to the first wall 31, the blocking structure 8 is disposed between the pressure relief mechanism and the gap 203, such that the size of the blocking structure 8 is reduced while the whole blocking structure 8 serves to enhance the blocking effect. Alternatively, when the battery cell 3 is connected to the first wall 31, a portion of the blocking structure 8 is disposed on the side of the pressure relief mechanism distal to the gap 203. The blocking structure 8 and the pressure relief structure are arranged in a staggered manner, preventing the blocking structure 8 from obstructing the pressure relief structure. In this case, the contact area between the blocking structure 8 and the battery cell group 7 or the case 202 is large, ensuring a stable connection between the blocking structure 8 and the case 202.

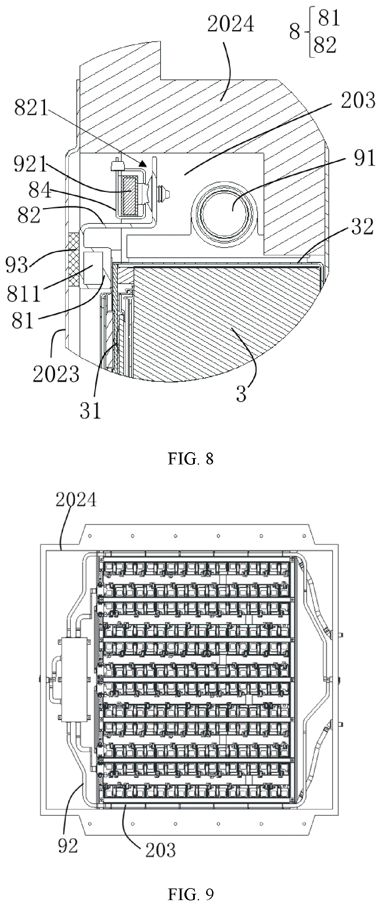

Referring to FIG. 8, FIG. 8 is an enlarged schematic structural diagram of part B in FIG. 7.

In some embodiments, as shown in FIGs. 6 to 8, the blocking structure 8 includes a first segment 81 and a second segment 82 connected to each other, the case 202 includes a first case wall 2023, the first segment 81 is disposed between the first wall 31 and the first case wall 2023, and the second segment 82 extends into the gap 203.

In these embodiments, the blocking structure 8 includes a first segment 81 and a second segment 82 connected to each other. The case 202 includes a first case wall 2023. The first segment 81 is disposed between the first wall 31 and the first case wall 2023; the first segment 81 enhances the rigidity of the battery 2 and enhances the deformation resistance of the case 202. The second segment 82 extends into the gap 203; the second segment 82 blocks high-temperature ejecta from entering the gap 203, thereby enhancing the reliability of the battery 2.

The first segment 81 is disposed between the first wall 31 and the first case wall 2023, and extends in the first direction X. The first segment 81 can enhance the rigidity of the battery 2 and enhance the deformation resistance of the first case wall 2023.

Optionally, the first segment 81 is disposed between the pressure relief mechanism and the gap 203, thereby blocking high-temperature ejecta from entering the gap 203.

The second segment 82 extends from the edge of the first wall 31 into the gap 203, thereby reducing the size of the second segment 82. Alternatively, a portion of the second segment 82 extends into the gap 203, while another portion of the second segment 82 is in contact with the first wall 31, thereby enhancing the supporting effect of the blocking structure 8 on the battery cell group 7.

Optionally, the blocking structure 8 includes a first segment 81 and a second segment 82. The first segment 81 and the second segment 82 are integrally formed, thereby enhancing the structural strength of the blocking structure 8. Alternatively, the second segment 82 is welded or bolted to the second segment 82, thereby enabling the blocking structure 8 to be applicable to cases 202 of the battery 2 of various specifications.

In some embodiments, as shown in FIGs. 7 and 8, the case 202 further includes a second case wall 2024 connected to a peripheral side of the first case wall 2023, and the gap 203 is formed between the second case wall 2024 and the second wall 32.

In these embodiments, the case 202 further includes a second case wall 2024 connected to a peripheral side of the first case wall 2023, and the gap 203 is formed between the second case wall 2024 and the second wall 32. The distance between the gap 203 and the first wall 31 is reduced, such that the size of the second segment 82 is reduced while the blocking structure 8 blocks high-temperature ejecta from entering the gap 203, thereby reducing the processing difficulty of the blocking structure 8.

Optionally, one end of the blocking structure 8 is connected to the first wall 31, and the other end thereof abuts against the second case wall 2024, such that the blocking structure 8 completely isolates the gap from the pressure relief structure, thereby blocking high-temperature ejecta from entering the gap 203.

Referring to FIG. 9, FIG. 9 is a schematic diagram of part of the structure of a battery according to an embodiment of the present application.

In some embodiments, as shown in FIGs. 6, 8, and 9, the battery 2 further includes an electrical connection structure 92. The electrical connection structure 92 is connected to one end of the battery cell group 7 in the first direction X, and the electrical connection structure 92 extends toward the other end of the battery cell group 7 in the first direction X. The electrical connection structure 92 includes an extending segment 921 located within the gap 203, and the extending segment 921 is connected to the second segment 82.

In these embodiments, the battery 2 further includes an electrical connection structure 92. The electrical connection structure 92 is connected to one end of the battery cell group 7 in the first direction X, and the electrical connection structure 92 extends toward the other end of the battery cell group 7 in the first direction X. The electrical connection structure 92 includes an extending segment 921 located within the gap 203, thereby properly utilizing the internal space of the case 202 and enhancing the internal space utilization rate of the case 202. The extending segment 921 is connected to the second segment 82, thereby enhancing the stability of the electrical connection structure 92.

Optionally, the electrical connection structure 92 may be a connection cable or a connection plate. Exemplarily, the connection structure may be a front-drive copper busbar connected to the high-voltage box and the front-drive connector. The high-voltage box and the front-drive connecting member 84 are disposed at two ends of the accommodating cavity in the first direction X, respectively.

The extending segment 921 of the electrical connection structure 92 is accommodated within the gap 203 and extends in the first direction X. The extending segment 921 is connected to the second segment 82, so as to fix the electrical connection structure 92 via the second segment 82.

The electrical connection structure 92 may be connected to the second segment 82 by adhesive connection, with an adhesive provided between the electrical connection structure 92 and the second segment 82. Alternatively, the second segment 82 is provided with a plurality of through holes spaced apart from each other, and the extending segment 921 penetrates through the through holes, so as to enable the second segment 82 to fix and support the extending segment 921. Alternatively, the second segment 82 is provided with a connecting member 84, and the second segment is connected to the electrical connection structure 92 via the connecting member 84.

Optionally, the extending segment 921 is disposed between the second segment 82 and the first case wall 2023, and the second segment 82 is connected to the end of the first segment 81 facing away from the first case wall 2023, thereby increasing the accommodating space for the extending segment 921 and reducing the assembly difficulty between the extending segment 921 and the second segment 82.

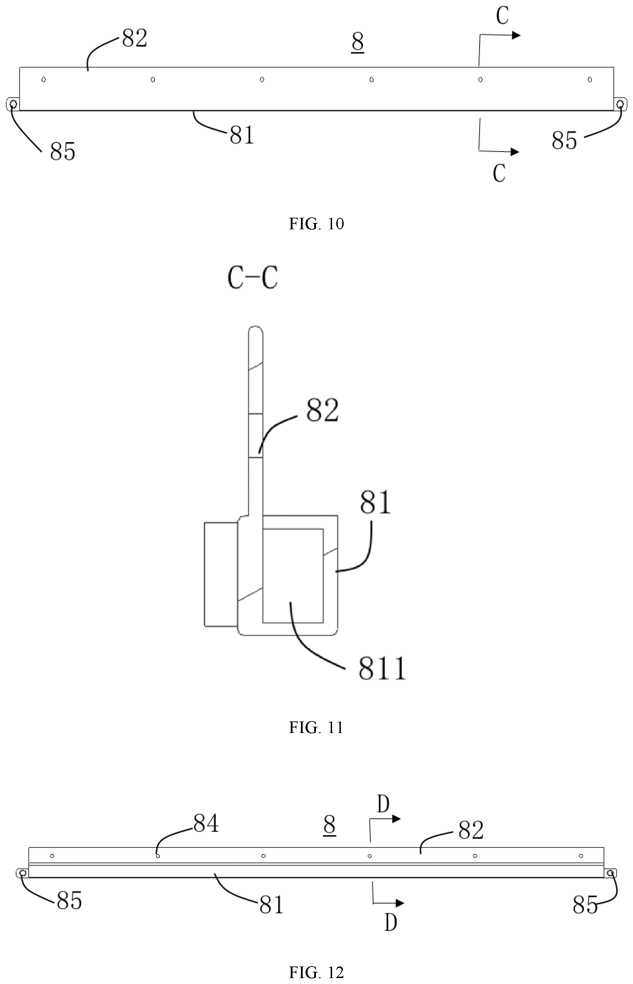

Referring to FIGs. 10 and 11, FIG. 10 is a top view of a blocking structure of a battery according to an embodiment of the present application; FIG. 11 is a cross-sectional view along C-C in FIG. 10.

In some embodiments, as shown in FIGs. 10 and 11, the second segment 82 is connected to the first segment 81 and extends toward the gap 203 in the second direction Y. The second segment 82 is in a flat-plate shape, so as to reduce the processing difficulty of the blocking structure 8. The electrical connection structure 92 is connected to the second segment 82.

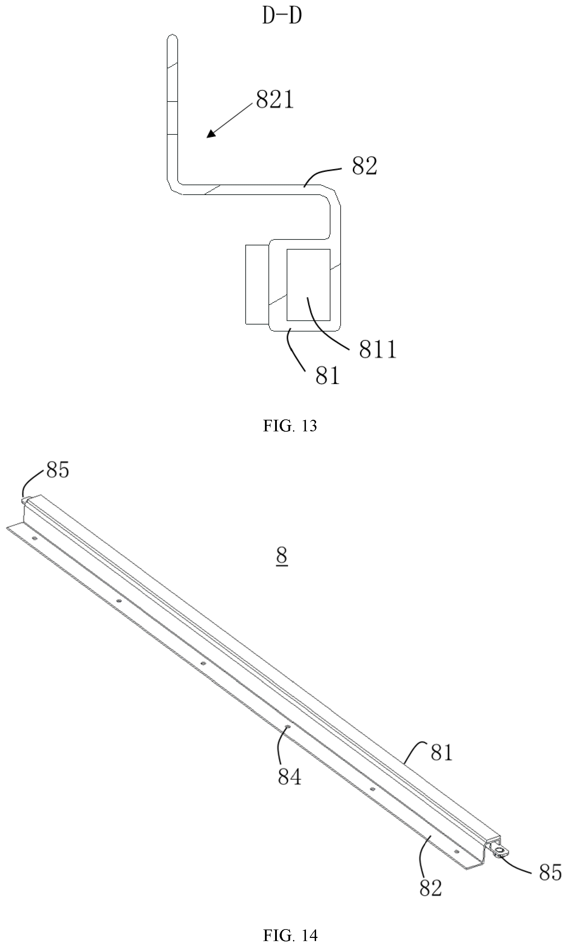

Referring to FIGs. 12 and 13, FIG. 12 is a top view of a blocking structure of a battery according to another embodiment of the present application; FIG. 13 is a cross-sectional view along D-D in FIG. 12.

In some embodiments, as shown in FIGs. 8, 12, and 13, a portion of the second segment 82 located within the gap 203 is bent in a direction facing away from the first case wall 2023, so as to form an accommodating space 821 between the second segment 82 and the first case wall 2023, and at least a portion of the extending segment 921 is disposed within the accommodating space 821.

In these embodiments, a portion of the second segment 82 located within the gap 203 is bent in a direction facing away from the first case wall 2023, so as to form an accommodating space 821 between the second segment 82 and the first case wall 2023, and at least a portion of the extending segment 921 is disposed within the accommodating space 821. Through the accommodating space 821 formed by bending, the distance between the second segment 82 and the first case wall 2023 is increased, and the assembly difficulty between the extending segment 921 and the second segment 82 is reduced. In addition, at least a portion of the extending segment 921 is disposed within the accommodating space 821, such that the second segment 82 limits the extending segment 921 via the wall part of the accommodating space 821.

The portion of the second segment 82 located within the gap 203 being bent in the direction facing away from the first case wall 2023, specifically, may be: the central region of the portion of the second segment 82 located within the gap 203 is bent in the direction facing away from the first case wall 2023 to form a groove-shaped accommodating space 821; alternatively, the end, of the portion of the second segment 82 located within the gap 203, toward the second case wall 2024 is bent in the direction facing away from the first case wall 2023 to form a stepped groove-shaped accommodating space 821.

The size of the accommodating space 821 can be flexibly designed, as long as at least a portion of the connection structure can be accommodated within the accommodating space 821, the wall part of the accommodating space 821 can limit the extending segment 921, and the accommodating space 821 can be configured to accommodate a greater amount of high-temperature substances during thermal runaway.

In some embodiments, as shown in FIG. 8, the blocking structure 8 further includes a connecting member 84 located in the accommodating space 821; one end of the connecting member 84 is connected to the second segment 82, and the other end of the connecting member 84 is connected to the extending segment 921.

In these embodiments, the blocking structure 8 further includes a connecting member 84 located in the accommodating space 821. The extending segment 921 is connected to the second segment 82 via the connecting member 84, thereby enhancing the connection reliability between the second segment 82 and the extending segment 921.

Optionally, the connecting member 84 is a tie; one end of the connecting member 84 is connected to the second segment 82, and the other end of the connecting member 84 is sleeved over the extending segment 921. Alternatively, the connecting member 84 is a snap, the extending segment 921 is provided with a slot, and the connecting member 84 is in snap-fit connection with the second segment 82 via the connecting member 84.

Optionally, one end of the connecting member 84 is connected to the end of the accommodating space 821 facing the first case wall 2023, and the other end of the connecting member 84 is connected toward the first case wall 2023, such that the connecting member 84 can securely fix the extending segment 921 within the accommodating space 821.

In some embodiments, as shown in FIGs. 6 to 8, the battery 2 further includes a heat exchange structure 91; the heat exchange structure 91 is configured to regulate the temperature of the battery cell 3, and at least a portion of the heat exchange structure 91 is accommodated within the gap 203 and located on a side of the second segment 82 facing away from the first case wall 2023.

In these embodiments, the battery 2 further includes a heat exchange structure 91; the heat exchange structure 91 is configured to regulate the temperature of the battery cells 3, and at least a portion of the heat exchange structure 91 is accommodated within the gap 203 and located on a side of the second segment 82 facing away from the first case wall 2023. Thus, when thermal runaway occurs in the battery 2, the second segment 82 can be configured to block high-temperature ejecta from contacting the heat exchange structure 91, thereby prolonging the service life of the heat exchange structure 91.

The battery 2 further includes a heat exchange structure 91. The heat exchange mechanism is configured to regulate the temperature of the battery 2, and a portion of the heat exchange structure 91 is accommodated within the gap 203. During thermal runaway of the battery 2, when part of the high-temperature ejecta overflows into the gap 203 and drips onto the heat exchange structure 91, the heat exchange structure 91 may be melted, leading to exacerbation of thermal runaway of the battery 2. Therefore, in the embodiments of the present application, at least a portion of the heat exchange structure 91 is disposed on the side of the second segment 82 facing away from the first case wall 2023. That is, the pressure relief mechanism is isolated from at least a portion of the heat exchange structure 91 via the second segment 82, so as to block high-temperature ejecta from direct contact with the heat exchange structure 91, thereby prolonging the service life of the heat exchange structure 91.

In some embodiments, as shown in FIGs. 6 to 8, the heat exchange structure 91 includes a heat exchange main body 911 and a heat exchange conduit 912. The heat exchange main body 911 is in heat conducting connection with the battery cell 3, the heat exchange conduit 912 is in communication with the heat exchange main body 911 and an external environment, and at least a portion of the heat exchange conduit 912 is located on the side of the second segment 82 facing away from the first case wall 2023.

In these embodiments, the heat exchange structure 91 includes a heat exchange main body 911 and a heat exchange conduit 912. The heat exchange main body 911 is in heat conducting connection with the battery cell 3, thereby enabling the heat exchange main body 911 to regulate the temperature of the battery cell 3. The heat exchange conduit 912 is in communication with the heat exchange main body 911 and an external environment, and at least a portion of the heat exchange conduit 912 is located on the side of the second segment 82 facing away from the first case wall 2023, such that during thermal runaway of the battery 2, the second segment 82 can block at least part of the high-temperature ejecta from contacting the heat exchange conduit 912, thereby prolonging the service life of the heat exchange structure 91.

The heat exchange structure 91 includes a heat exchange main body 911 and a heat exchange conduit 912. The heat exchange main body 911 is in contact with the battery cell 3 directly, or the heat exchange main body 911 is in contact with the battery cell 3 via a thermally conductive adhesive. The heat exchange main body 911 is configured to regulate the temperature of the battery cell 3, the heat exchange main body 911 accommodates a heat exchange medium, and the heat exchange medium circulates with the external environment through the heat exchange loop.

The heat exchange conduit 912 extends within the gap 203, so as to properly utilize the internal space of the accommodating cavity. In addition, the heat exchange conduit 912 is typically made of a non-metallic material. Therefore, at least a portion of the heat exchange conduit 912 is located on the side of the second segment 82 facing away from the first case wall 2023, such that the second segment 82 blocks high-temperature ejecta from contacting the heat exchange management during thermal runaway of the battery 2, thereby prolonging the service life of the heat exchange conduit 912.

Optionally, the second segment 82 completely isolates the gap 203 from the pressure relief structure, such that the second segment 82 completely isolates the pressure relief structure from the heat exchange conduit 912.

Optionally, the heat exchange structure 91 and the electrical connection structure 92 are disposed on two sides of the second segment 82, respectively.

In some embodiments, as shown in FIG. 8, the first segment 81 includes a weight reducing cavity 811 extending in the first direction X.

In these embodiments, the first segment 81 includes a weight reducing cavity 811 extending in the first direction X, so as to reduce the weight of the blocking structure 8, thereby achieving an overall weight reduction of the battery 2. In addition, when the first case wall 2023 is subjected to an external impact, the first segment 81 can deform through the weight reducing cavity 811 to absorb energy, thereby enhancing the protective capability of the blocking structure 8 for the battery cell group 7.

The weight reducing cavity 811 may be a through hole penetrating through the first segment 81 in the first direction X. The cross-sectional shape of the weight reducing cavity 811 in the first direction X can be flexibly designed. Exemplarily, the cross-sectional shape of the weight reducing cavity may be rectangular, circular, or the like.

In some embodiments, as shown in FIG. 8, the battery 2 further includes a buffer member 93. The buffer member 93 is disposed between the first segment 81 and the first case wall 2023, and the buffer member 93 is elastically disposed in a thickness direction of the first case wall 2023.

In these embodiments, the battery 2 further includes a buffer member 93. The buffer member 93 is disposed between the first segment 81 and the first case wall 2023, and the buffer member 93 is elastically disposed in a thickness direction of the first case wall 2023. The buffer member 93 can absorb an assembly tolerance between the first segment 81 and the first case wall 2023, thereby reducing the processing difficulty of the battery 2.

Optionally, the buffer member 93 is adhesively connected to the first segment 81 or the first case wall 2023, so as to enhance the connection reliability between the buffer member 93 and the first segment 81 or the first case wall 2023.

Optionally, the buffer member 93 is a rubber pad, a foam pad, or the like.

Optionally, a fixing groove is formed on the first case wall 2023, and a portion of the buffer member 93 is disposed within the fixing groove, so as to enhance the connection reliability between the buffer member 93 and the first case wall 2023.

Optionally, the blocking structure 8 and the buffer member 93 are integrally formed, so as to simplify the assembly steps of the case 202 and the blocking structure 8.

Referring to FIG. 14, FIG. 14 is a schematic structural diagram of a blocking structure of a battery according to an embodiment of the present application.

In some embodiments, as shown in FIGs. 6 and 14, the case 202 further includes a crossbeam 204 extending in a second direction Y and connected to an inner wall surface of the case 202. Two crossbeams 204 are spaced apart from each other in the first direction X, the battery cell group 7 is located between the two crossbeams 204, and both ends of the blocking structure 8 are connected to the two crossbeams 204. The first direction X intersects with the second direction Y.

In these embodiments, the case 202 further includes a crossbeam 204 extending in a second direction Y and connected to an inner wall surface of the case 202. Two crossbeams 204 are spaced apart from each other in the first direction X, the battery cell group 7 is located between the two crossbeams 204, and both ends of the blocking structure 8 are connected to the two crossbeams 204, thereby enhancing the connection reliability between the blocking structure 8 and the case 202.

Optionally, a connecting segment 85 is disposed at the end part of the first segment 81 in the first direction X, and the first segment 81 is fitted into the crossbeam 204 of the case 202 via the connecting segment 85. The connecting segment 85 is detachably connected to the first segment 81, so as to enable the connecting segment 85 to be applicable to blocking structures 8 of different sizes and specifications.

In some embodiments, as shown in FIGs. 5 and 6, the battery 2 further includes a pressing strip 94, and both ends of the pressing strip 94 are connected to the two crossbeams 204. A plurality of battery cell groups 7 are arranged in the second direction Y. The pressing strip 94 is connected to two adjacent battery cell groups 7, and the blocking structure 8 is connected to battery cell groups 7 at both ends of the second direction Y.

In these embodiments, the battery 2 further includes a pressing strip 94. Both ends of the pressing strip 94 are connected to the two crossbeams 204, thereby enhancing the connection reliability between the pressing strip 94 and the case 202. A plurality of battery cell groups 7 are arranged in the second direction Y; the pressing strip 94 enhances the rigidity of the case 202. The pressing strip 94 is connected to two adjacent battery cell groups 7, and the blocking structure 8 is connected to battery cell groups 7 at both ends of the second direction Y, such that the pressing strip 94 and the blocking structure 8 fix and limit the battery cell groups 7, thereby enhancing the reliability of the battery 2.

The pressing strip 94 is disposed between the first case wall 2023 and the battery cell group 7, and both ends of the pressing strip 94 in the first direction X are connected to the crossbeams 204 of the case 202. The pressing strip 94 is connected to adjacent battery cell groups 7; the pressing strip 94 fixes and limits the battery cell groups 7.

The blocking structure 8 is connected to the battery cell groups 7 at both ends of the second direction Y. While the blocking structure 8 fixes the battery cell groups 7, the blocking structures 8 located at both ends block high-temperature ejecta from overflowing into the gap 203 on either side of the battery 2 in the second direction Y.

In a second aspect, the embodiments of the present application provide an electric device. The electric device includes the battery according to any one of the embodiments of the first aspect.

In some embodiments, as shown in FIGs. 1 to 14, the battery 2 includes a case 202, battery cells 3, and a blocking structure 8. The case 202 is provided with an accommodating cavity. The battery cell group 7 is located within the accommodating cavity; the battery cell group 7 includes at least one row of a plurality of battery cells 3 arranged in a first direction X. The battery cell 3 includes a first wall 31 and a second wall 32 connected to and intersecting with each other; the first wall 31 is provided with a pressure relief mechanism. The blocking structure 8 includes a first segment 81 and a second segment 82 connected to each other. The first segment 81 includes a weight reducing cavity 811 extending in the first direction X. The case 202 includes a first case wall 2023; the first segment 81 is disposed between the first wall 31 and the first case wall 2023. The case 202 further includes a second case wall 2024 connected to the peripheral side of the first case wall 2023, and a gap 203 is formed between the second case wall 2024 and the second wall 32. The second segment 82 extends into the gap 203, so as to block at least part of the emissions discharged via the pressure relief mechanism from entering the gap 203. The battery 2 further includes an electrical connection structure 92; the electrical connection structure 92 is connected to one end of the battery cell group 7 in the first direction X, and the electrical connection structure 92 extends toward the other end of the battery cell group 7 in the first direction X. The electrical connection structure 92 includes an extending segment 921 located within the gap 203, and the extending segment 921 is connected to the second segment 82. A portion of the second segment 82 located within the gap 203 is bent in a direction facing away from the first case wall 2023, so as to form an accommodating space 821 between the second segment 82 and the first case wall 2023, and at least a portion of the extending segment 921 is disposed within the accommodating space 821. The blocking structure 8 further includes a connecting member 84 located in the accommodating space 821; one end of the connecting member 84 is connected to the second segment 82, and the other end of the connecting member 84 is connected to the extending segment 921. The battery 2 further includes a heat exchange structure 91. The heat exchange structure 91 includes a heat exchange main body 911 and a heat exchange conduit 912. The heat exchange main body 911 is in heat conducting connection with the battery cell 3, and the heat exchange conduit 912 is in communication with the heat exchange main body 911 and the external environment. At least a portion of the heat exchange conduit 912 is located on the side of the second segment 82 facing away from the first case wall 2023. The battery 2 further includes a buffer member 93; the buffer member 93 is disposed between the first segment 81 and the first case wall 2023, and the buffer member 93 is elastically disposed in a thickness direction of the first case wall 2023. The case 202 further includes a crossbeam 204 extending in a second direction Y and connected to an inner wall surface of the case 202; two crossbeams 204 are spaced apart from each other in the first direction X, the battery cell group 7 is disposed between the two crossbeams 204, and both ends of the blocking structure 8 are connected to the two crossbeams 204. The battery 2 further includes a pressing strip 94, and both ends of the pressing strip 94 are connected to the two crossbeams 204. A plurality of battery cell groups 7 are arranged in the second direction Y, the pressing strip 94 is connected to two adjacent battery cell groups 7, and the blocking structure 8 is connected to battery cell groups 7 at both ends of the second direction Y.

In the solutions of the embodiments of the present application, the battery 2 includes a case 202, a battery cell 3, and a blocking structure 8. The case 202 is provided with an accommodating cavity. The battery cell group 7 is located within the accommodating cavity; the battery cell group 7 includes at least one row of a plurality of battery cells 3 arranged in a first direction X. The battery cell 3 includes a first wall 31 and a second wall 32 connected to and intersecting with each other. The first wall 31 is provided with a pressure relief mechanism, and a gap 203 is provided between the second wall 32 and the case 202. When thermal runaway occurs in the battery 2, high-temperature ejecta are expelled from the pressure relief mechanism of the first wall 31, and at least a portion of the blocking structure 8 is located within the gap 203, so as to block at least part of the emissions discharged via the pressure relief mechanism from entering the gap 203. This mitigates the risk that high-temperature ejecta damages the insulating film of the second wall 32 and bridges between the second wall 32 and the inner wall of the case 202, leading to internal short circuits of the battery 2 and exacerbating thermal runaway of the battery 2, thereby enhancing the reliability of the battery 2.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of the claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A battery, comprising:
a case , provided with an accommodating cavity;
a battery cell group, located within the accommodating cavity, wherein the battery cell group comprises at least one row of a plurality of battery cells arranged in a first direction, the battery cell comprises a first wall and a second wall connected to and intersecting with each other, the first wall is provided with a pressure relief mechanism, and a gap is provided between the second wall and the case ; and
a blocking structure, at least a portion of the blocking structure being located within the gap, so as to block at least part of emissions discharged via the pressure relief mechanism from entering the gap.

2. The battery according to claim 1, wherein the blocking structure is connected to an outer surface of the battery cell and extends from the outer surface of the battery cell into the gap.

3. The battery according to claim 2, wherein the blocking structure comprises a first segment and a second segment connected to each other, the case comprises a first case wall, the first segment is disposed between the first wall and the first case wall, and the second segment extends into the gap.

4. The battery according to claim 3, wherein the case further comprises a second case wall connected to a peripheral side of the first case wall, and the gap is formed between the second case wall and the second wall.

5. The battery according to claim 3, wherein the battery further comprises an electrical connection structure, the electrical connection structure is connected to one end of the battery cell group in the first direction, and the electrical connection structure extends toward the other end of the battery cell group in the first direction;
the electrical connection structure comprises an extending segment located within the gap, and the extending segment is connected to the second segment.

6. The battery according to claim 5, wherein a portion of the second segment located within the gap is bent in a direction facing away from the first case wall, so as to form an accommodating space between the second segment and the first case wall, and
at least a portion of the extending segment is disposed within the accommodating space.

7. The battery according to claim 6, wherein the blocking structure further comprises a connecting member located in the accommodating space; one end of the connecting member is connected to the second segment, and the other end of the connecting member is connected to the extending segment.

8. The battery according to any one of claims 3 to 7, wherein the battery further comprises a heat exchange structure; the heat exchange structure is configured to regulate a temperature of the battery cell, at least a portion of the heat exchange structure is accommodated within the gap and located on a side of the second segment facing away from the first case wall.

9. The battery according to claim 8, wherein the heat exchange structure comprises a heat exchange main body and a heat exchange conduit; the heat exchange main body is in heat conducting connection with the battery cell, the heat exchange conduit is in communication with the heat exchange main body and an external environment, and at least a portion of the heat exchange conduit is located on the side of the second segment facing away from the first case wall.

10. The battery according to any one of claims 3 to 9, wherein the first segment comprises a weight reducing cavity extending in the first direction.

11. The battery according to any one of claims 3 to 10, wherein the battery further comprises a buffer member; the buffer member is disposed between the first segment and the first case wall, and the buffer member is elastically disposed in a thickness direction of the first case wall.

12. The battery according to any one of claims 2 to 11, wherein the case further comprises a crossbeam extending in a second direction and connected to an inner wall surface of the case; two crossbeams are spaced apart from each other in the first direction, the battery cell group is disposed between the two crossbeams, and both ends of the blocking structure are connected to the two crossbeams; the first direction intersects with the second direction.

13. The battery according to claim 12, wherein the battery further comprises a pressing strip, and both ends of the pressing strip are connected to the two crossbeams; a plurality of battery cell groups are arranged in the second direction, the pressing strip is connected to two adjacent battery cell groups, and the blocking structure is connected to battery cell groups at both ends of the second direction.

14. An electric device, comprising the battery according to any one of claims 1 to 13.
